# EUROPEAN PATENT APPLICATION

(11) **EP 4 530 271 A1**
(43) Date of publication of application: **02.04.2025**
(21) Application number: 23199863.4
(22) Date of filing: 26.09.2023
(51) Int. Cl.: C03C 17/34, C03C 17/36, G02F 1/00

(54) **THERMOCHROMIC GLAZING**

(71) Applicant: AGC Glass Europe, 1348 Louvain-La-Neuve (BE)
(72) Inventor: RUITENBERG, Gerard, 6041 Gosselies (BE)
(74) Representative: AGC Glass Europe

(57) **Abstract**

The present invention relates to a thermochromic glazing, to a laminated glazing or insulated glazing unit comprising said thermochromic glazing, and to a process to provide for a thermochromic glazing, wherein the thermochromic glazing comprises a thermochromic smart film provided with a protective stack.

## Description

### FIELD OF THE INVENTION

The present invention relates to a thermochromic glazing, to a laminated glazing or insulated glazing unit comprising said thermochromic glazing, and to a process to provide for a thermochromic glazing.

### BACKGROUND OF THE INVENTION

Thermochromism herein refers to the phenomenon in which an oxide or a sulfide of a transition metal undergoes a change in its crystalline structure below and above a specific temperature (i.e. its transition temperature (Tc)), whereby its physical properties such as electrical conductivity and/or infrared (IR) transmittance, significantly change.

When a glass substrate is coated with a thin film that has such thermochromic capability, a "smart window" can be produced, which transmits visible light but blocks near infrared (NIR) radiation and infrared (IR) radiation at or above a predetermined temperature in order to prevent the indoor temperature from increasing. The application of smart windows to vehicles or buildings may be very effective in saving energy.

Materials that exhibit thermochromism include oxides of several transition metals, among which vanadium dioxide (VO₂).

Vanadium has various oxide phases, with the binary VO₂ presenting stimuli-dependent phase transitions that manifest as switchable electronic and optical features. The particular stimulus is provided with temperature, which induces a modification from insulator to metal transition withing the VO₂ crystals due to a crystallographic distortion. Vanadium dioxide (VO₂) presents a characteristic temperature-dependent insulator-to-metal transition (IMT) at about 68°C. An elevated temperature induces an insulator-to-metal transition (IMT) as the crystal reorients from a monoclinic state (insulator) to a tetragonal arrangement (metallic).

This transition is accompanied by a simultaneous change in optical properties making VO₂ a versatile optoelectronic material, wherein the material may have a variable light transmittance in the visible wavelength range and also changes from being transparent to nearly opaque at infrared (IR) wavelengths.

This so-called transition temperature (Tc) may be reduced to levels close to room temperature by the use of appropriate dopants.

Various deposition methods exist to deposit vanadium oxide on glass, including HiPIMS (High Power Impulse Magnetron Sputtering) on previously heated glass at a temperature of 350°C. Other methods include magnetron sputtering, from which the thermochromic layers suffer from poor stability upon thermal treatment, required to provoke the crystallization of the vanadium oxide for an effective transition modification.

US2005/0147825A1 discloses a glazing coated with at least one layer having thermochromic properties comprising vanadium oxide, and also with at least one other layer having thermal properties, such as an infrared reflecting layer, and/or at least one other layer having optical properties, such as antireflection in the visible, and/or electrical conduction properties; and having a particular application for making solar control glazing.

EP2604585A1 discloses a method of manufacturing a thermochromic substrate, with which transmittance can be increased. The method includes the steps of forming a first thin film as a coating on a base substrate, the refractive index of the first thin film being different from that of a VO₂ thin film; forming a pre-thermochromic thin film by coating the first thin film with pure vanadium; forming a second thin film as a coating on the pre-thermochromic thin film, the refractive index of the second thin film being different from that of a VO₂ thin film; and heat-treating a resultant stack that includes the base substrate, the first thin film, the pre-thermochromic thin film and the second thin film.

There is however a lack of stability of thermochromic glazing with regard to tempering or bending temperatures, limiting the use of such thermochromic thin films in building or automotive applications.

### SUMMARY OF THE INVENTION

It is therefore an object of the invention to provide a thermochromic glazing which remains stable through tempering or bending temperatures.

The present invention relates to a thermochromic glazing comprising
a. a first substrate having a first surface and a second surface,
b. a thermochromic smart film on the first surface of the substrate comprising, in sequence,
   i. a first dielectric layer,
   ii. a thermochromic layer,
   iii. a protective stack on the thermochromic layer, said stack comprising, in sequence,
      1. a first layer impermeable to alkali;
      2. a layer suitable for retention of alkali on the first layer impermeable to alkali and comprising a material other than a material of the first layer impermeable to alkali;
      3. a second layer impermeable to alkali on the layer suitable for retention of alkali and comprising a material other than a material of the layer suitable for retention of alkali.

### DETAILED DESCRIPTION OF THE INVENTION

The first substrate having a first surface and a second surface according to the invention may be any substrate such as for instance glass and polymers such as polycarbonate (PC), polyethylene terephthalate (PET), polystyrene (PS), polyvinyl chloride (PVC), polymethyl methacrylate (PMMA). Polymeric substrates may be rigid (glass or polycarbonate), semi-rigid or flexible (polyethylene terephthalate, polyvinyl chloride, etc.).

The first substrate according to the invention may be flat or curved/bended.

According to the invention, the first substrate is more preferably a glass sheet. According to an embodiment, the glass sheet is a float glass sheet.

The glass may be a glass of soda-lime-silica, aluminosilicate or borosilicate type, and the like. Typically, the glass sheet is float glass, having a thickness of from 0.5 to 12 mm. In transportation applications, the glass may have a thickness ranging of from 1 to 8 mm, while they may also be thinner or thicker in construction applications, like ultrathin glass from 0.5 to 1 mm, or thicker glass, from 8 to 12 mm, in addition to the thickness of from 1 to 8 mm.

The composition of the glazing is not crucial for the purpose of the present invention, provided said glass sheet is appropriate for transportation or architectural applications. The glass may be clear glass, ultra-clear glass or colored glass, comprising one or more component (s)/colorant(s) in an appropriate amount as a function of the effect desired. Colored glass include grey, green or blue float glass. In some circumstances, colored glass may be advantageous to provide for appropriate and desired color of the final glazing.

The glass may preferably be clear or extra-clear float soda-lime glass.

The thermochromic smart film on the first surface of the substrate comprises, in sequence, a first dielectric layer, a thermochromic layer and a protective stack on the thermochromic layer.

In the scope of the present invention, a layer may comprise one or more sublayers. When a layer is qualified as low refractive index layer, it may comprise sublayers each having a low refractive index. A low refractive index is considered < 1.70, preferably < 1.60.

When a layer is qualified as high refractive index layer, it may comprise sublayers each having a high refractive index. A high refractive index is considered ≥ 1.70, preferably ≥ 1.80, more preferably ≥ 1.90.

The first dielectric layer may be selected from metal oxides, nitrides, oxynitrides or oxycarbides, that is, oxides, nitrides, oxynitrides or oxycarbides of Zn, Sn, Ti, Zr, Si, In, Al, Bi, Ta, Hf, Mg, Nb, Y, Ga, Sb, Mg, Cu, Ni, Cr, Fe, V, B or mixtures thereof.

Preferred dielectric materials include oxides of Bi, Hf, In, Mg, Nb, Ni, Sb, Sn, Ti, W, Y, Zn, Zr, Al, Si or mixtures thereof, in particular mixtures of oxides of In and Sn, Zn and Sn, Zn and Ti, Ti and Zr, Ti and Si, Ti and Nb, Zr and B, Ga and Zn, Zn and Al, TI and Zr and Si, Ti and Zr and Al, or Ti and Zr and Al and Y, any oxides being optionally doped with Al, B, F, or Ga, In, Si, Sb, Sn, Sb; nitrides of Al, Cr, Si, Ta, Ti, Zr or mixtures thereof, in particular mixtures of nitrides of Si and Zr or Si and Ta, any nitrides being optionally doped with Al, Cr, Ni, or Z; oxynitrides or oxycarbides of Si.

Most preferred dielectric materials include silicon based oxides, silicon based nitrides, zinc oxides, aluminium doped zinc oxides, zinc-based oxides, tin oxides, mixed zinc-tin oxides, silicon nitrides, silicon oxynitrides, titanium oxides, aluminium oxides, zirconium oxides, niobium oxides, aluminium nitrides, bismuth oxides, mixed silicon-zirconium nitrides, and mixtures of at least two thereof, such as for example titanium-zirconium oxides, titanium-niobium oxides, zinc-titanium oxides, zinc-gallium oxides, zinc-indium-gallium oxides, zinc-titanium-aluminium oxides, zinc-tin-titanium oxides, zinc- aluminium-vanadium oxides, zinc-aluminium-molybdenum oxides, zinc- aluminium -magnesium oxides, zinc- aluminium-chromium oxides, zinc-aluminium-copper oxides, zinc-titanium-zirconium oxides.

The first dielectric layer may consist of a plurality of individual layers comprising or essentially consisting of the above materials.

The first dielectric layers may each have a thickness ranging from 0.1 to 200 nm, alternatively from 0.1 to 150 nm, alternatively from 1 to 120 nm, alternatively from 1 to 80 nm.

The thermochromic layer of the present invention may be selected from vanadium oxide, or doped vanadium oxide.

In the scope of the present invention,, the term "vanadium oxide" as used herein is understood to mean one of the oxides of this metal which has thermochromic properties, namely, essentially vanadium dioxide VO₂.

In the scope of the present invention, a dopant is present in amounts < 10 %wt of the material, while a mixed X and Y (or more) material comprises more than 15 %wt of each X and Y (or more) in the mixed material.

As known in the art, vanadium oxide has a transition temperature set at 68°C. With the addition of one or more dopants, the transition temperature may be lowered to ranges of from 25 to 40°C.

Examples of dopants, present in amounts ranging from 0.5 to 10 at% in the vanadium oxide, include titanium (Ti), niobium (Nb), molybdenum (Mo), iridium (Ir), tungsten (W), tantalum (Ta), magnesium (Mg), fluorine (F), strontium (Sr), or mixtures of these.

Preferred dopants in the scope of the present invention may be selected from preferably from tungsten (W), magnesium (Mg) or strontium (Sr), for their practicability and their efficiency in adjusting the transition temperature to values ranging from 25 to 40°C. At temperatures of 25° C, 30° C, or 35° C, the vanadium oxide may then completely fulfil its role of solar control layer.

The most preferred dopant may be tungsten, preferably used in amounts of from 0.5 to 3.5 at% with respect to vanadium, providing for an optimal transition temperature of 20 to 27°C.

The thickness of the thermochromic layer may range of from 10 to 1000 nm, preferably 100 to 300 nm, more preferably 150 to 250 nm.

The present thermochromic glazing was surprisingly found to resist heat treatment such as toughening or bending up to temperatures of 400° to 500°C, due to the presence of the protective stack on the thermochromic layer which protects the thermochromic layer from degradation arising from the corrosive species present in the heat treatment atmosphere, such as sodium oxide vapors.

The protective stack provides an efficient barrier to alkali (i.e., to alkali ions) during the heat treatments undergone by the thermochromic glazing.

The protective stack thus comprises at least three layers, in sequence,
1. a first layer impermeable to alkali;
2. a layer suitable for retention of alkali on the first layer impermeable to alkali and comprising a material other than a material of the first layer impermeable to alkali;
3. a second layer impermeable to alkali on the layer suitable for retention of alkali and comprising a material other than a material of the layer suitable for retention of alkali.

The layers impermeable to alkali prevent alkali from migrating through them towards the lower layers, among which the thermochromic layer.

The layer suitable for retention of alkali, on the contrary, have a tendency to trap and block alkali which attempt migration through them.

The combination of such a protective stack above the thermochromic layer, allows for alkali ions susceptible to migrate through the impermeable layers to be retained within the retention layer, and so be blocked away from said thermochromic layer. Although effectively used in instances underneath a functional layer other than a thermochromic layer, such a protective stack has surprisingly been found to be compatible with vanadium oxide such that transition of said thermochromic layer remains within the temperature range defined by the composition of the thermochromic layer. Surprisingly, it has also been found that the protective stack actually facilitates the transition of the thermochromic material from the metallic state to the insulator state, such that the temperature switch operates with acceptable visible light transmittance and infrared light transmittance from the hot to the cold state.

Examples of impermeable materials to alkali include silicon nitride and/or aluminium nitride.

Examples of retention materials to alkali include silicon oxide, tin oxide, mixed oxide of tin and zinc, which may be optionally doped with aluminium.

The first and second layers impermeable to alkali may the same of different. Preferably, they may be the same.

The thickness of the first layer impermeable to alkali may range of from 3 to 30 nm, preferably of from 5 to 20 nm, more preferably of from 5 to 15 nm.

The thickness of the layer suitable for retention of alkali may range of from 20 to 60 nm, preferably of from 25 to 40 nm, more preferably of from 25 to 35 nm.

The thickness of the second layer impermeable to alkali may range of from 3 to 30 nm, preferably of from 5 to 20 nm, more preferably of from 5 to 15 nm.

The following test methods may be considered to determine the capability of a material to be either impermeable to alkali or to be capable of retention of alkali.

A glass substrate comprising a concentration by weight of sodium ions of at least 5% (also referred to as Cglass), having a minimum thickness of 2 mm is used, onto which the test material is deposited in a layer of a thickness of 100 nm. The coated substrate is subsequently annealed at 600° C, under air for 30 min at a pressure of approximately 1 atm.

After the annealing, the concentration by weight of sodium ions is measured at a depth of 50 nm in the layer by the SIMS (Secondary Ion Mass Spectroscopy) method. It is denoted C50. This concentration is also measured on a control sample before annealing for the test of the retention material, and is also denoted C50.

A material impermeable to alkali will satisfy the result C50/Cglass ≦ 0.001 after the annealing.

A material capable for retention of alkali will satisfy the result C50/Cglass≦0.001 before the annealing and C50/Cglass ≧ 0.3 after the annealing.

The SIMS measurements are, for example, carried out with the following parameters in order to determine the concentrations of sodium ions:
- abrasion with Cs atoms (energy=3 keV)
- analysis with Ga atoms (energy=15 keV).

The above measurement method is provided by way of example. Other methods may exist, for the analysis of the concentration by weight of sodium ions.

The thermochromic film may further comprise a topcoat comprising a mixed oxide of silicon and zirconium, or mixed oxide of titanium and zirconium, for additional durability of the thermochromic smart film.

In a particular embodiment of the present invention, a supplemental metallic barrier layer may be provided between the thermochromic layer and the protective stack.

The metallic barrier layer is a thin layer of sacrificial metallic material having a thickness < 15 nm, alternatively < 9 nm, provided above and in contact with the thermochromic layer.

That is, in some embodiments of the present invention, the thermochromic smart film on the first surface of the substrate may comprise, in sequence,
i. a first dielectric layer,
ii. a thermochromic layer,
iii. a metallic barrier layer,
iv. a protective stack on the thermochromic layer, said stack comprising, in sequence,
   1. a first layer impermeable to alkali;
   2. a layer suitable for retention of alkali on the first layer impermeable to alkali and comprising a material other than a material of the first layer impermeable to alkali;
   3. a second layer impermeable to alkali on the layer suitable for retention of alkali and comprising a material other than a material of the layer suitable for retention of alkali.

Example of such metallic barrier layers include titanium, zinc, nickel, aluminium chrome, niobium and mixtures thereof. Preferred metallic barrier layers may be selected from nickel, chromium, niobium and nickel/chromium alloys.

The presence of such a metallic barrier layer above and in contact with the thermochromic layer, and underneath the protective stack allows to increase the resistance of the thermochromic smart film to the thermal treatment up to temperatures of 510° to 700°C. In some instances, the metallic barrier layer may lead to a more dense quality of the next layer, that is, the first layer impermeable to alkali of the thermochromic smart film.

Examples of unsuitable metallic barrier layers include silver. That is, the thermochromic smart film herein is free of any silver layer.

The present invention further relates to a laminated glazing comprising
a. a thermochromic glazing such as discussed above, having a first substrate having a first and a second surface,
b. a second substrate having a first and a second surface,
c. an interlayer bonding the first surface of the first substrate of the thermochromic glazing and the second surface of the second substrate.

Typically, a laminated glazing comprises an outer pane having an outer surface (S1) and an inner surface (S2), and an inner pane having an outer surface (S3) and an inner surface (S4). The outer pane of the glazing is that in contact with the exterior of the vehicle or building. The inner pane is that in contact with the inner space of the vehicle or building. The outer surfaces face the exterior environment, while the inner surfaces face the interior environment. The two panes are held in contact with an interlayer, serving the adhesion and contact between the two panes. The interlayer typically provides for the contact between the first surface of the inner pane (S3) and the second surface of the outer sheet of glass (S2).

In the scope of the present invention, the second substrate may independently be the same or different from the first substrate of the thermochromic glazing of the present invention, that is, may be any substrate such as glass and polymers such as polycarbonate (PC), polyethylene terephthalate (PET), polystyrene (PS), polyvinyl chloride (PVC), polymethyl methacrylate (PMMA).

Preferably, the second substrate is a glass substrate such as preferred for the first substrate. The thickness of the second substrate may range of from 0.5 to 12 mm, or as discussed above. The second substrate may be a colored glass sheet. In some instances, it may be preferred that the second substrate has a defined color or tint such as to neutralize any color provided from the thermochromic glazing due to the thermochromic layer intrinsic color.

The first and second substrates may have the same thickness or have different thicknesses, as the end use requires.

The interlayer typically contains thermoplastic materials, for example, polyvinyl butyral (PVB), ethylene vinyl acetate (EVA), polyurethane (PU), polyethylene terephthalate (PET), polycarbonate, or multiple layers thereof, typically with a total thickness of from 0.3 to 0.9 mm. The interlayer may be clear (uncolored), or may contain colorants, and thus be a colored interlayer.

In some instances, compatible with the instances regarding the second substrate, it may be preferred that the interlayer has a defined color or tint such as to neutralize any color provided from the thermochromic glazing due to the thermochromic layer intrinsic color and/or from the second substrate. In combination, it may thus be possible to select the interlayer and second substrate together to reach a preferred color rendering of the laminated glazing, and achieve an aesthetically pleasing and/or neutrally colored laminated glazing.

The thickness of the thermoplastic interlayer may be in a range from 0.25 mm to 2.54 mm, from 0.25 mm to 2.29 mm, from 38 mm to 1.52 mm, from 0.51 to 1 .27 mm, or from 0.38 to 0.89 mm.

The interlayer typically has a uniform thickness throughout its surface between the two sheets of glass. The interlayer is thus typically not considered a "wedge" interlayer, although such wedge interlayer may be used depending on the final use of the laminated thermochromic glazing.

In the scope of the present invention, the thermochromic smart film may be preferably positioned towards the interlayer, that is in so called position 2 or 3 of a typical laminated glazing. That is, the first substrate provided with the thermochromic smart film may be the exterior pane or the interior pane when the laminated glazing is considered in the installed position to separate an external environment from an external environment.

Preferably, the thermochromic glazing is the external pane of the laminated glazing, with the first surface of the first substrate oriented towards the interlayer, such that the second substrate is the internal pane in the installed position. The interlayer may then bond the second surface of the second substrate, to the first surface of the first substrate of the thermochromic glazing.

In such disposition, the thermochromic smart film, present on the first surface of the first substrate, is positioned in position 2 of the laminated glazing, facing the interlayer, and so directly accessible from the exterior environment and sun light, such that it is easily enabled to transition from metal state to insulator state or the reverse, upon rising or decreasing temperatures.

The first and second surfaces of the second substrate may be provided with any suitable coating for infrared reflection and/or solar control, or a low emissivity coating. Such coatings are well known in the art and need not be detailed herein.

Examples include a low emissivity coating comprising a transparent conductive oxide or a nitride based functional layer on the first surface of the second substrate - that is in position 4 in the installed position; and/or, an infrared reflective coating on the second surface of the second substrate - that is in position 3 in the installed position.

In the preferred instances when the thermochromic glazing is the external pane of the laminated glazing and the second substrate is the internal pane in the installed position, the first surface of the second substrate, being the face facing the interior in the installed position, may be provided by a low emissivity coating comprising a transparent conductive oxide or a nitride based functional layer.

The low emissivity coating may comprise at least one functional layer that contains a transparent conductive oxide (TCO), selected from indium tin oxide, antimony-doped or fluorine-doped tin oxide, gallium- and/or aluminum-doped zinc oxide, mixed indium zinc, vanadium oxide, tungsten and/or magnesium doped vanadium oxide, niobium-doped titanium oxide and/or cadmium stannate; or at least one nitride based functional layer with low emissivity properties selected from titanium nitride, chromium nitride, niobium nitride, molybdenum nitride, hafnium nitride, or mixtures thereof.

Preferred transparent conductive oxide (TCO) may be selected from indium tin oxide, antimony-doped or fluorine-doped tin oxide and/or aluminum-doped zinc oxide (ZnO:Al) and/or gallium-doped zinc oxide (ZnO:Ga), with indium tin oxide or fluorine-doped tin oxide most preferred. Preferred nitride based functional layer may be selected from titanium nitride or chromium nitride, or mixtures thereof.

The two substrates and the interlayer may be assembled by a typical lamination method for flat glass, or may be a bending step for curved laminated glass, which bending step includes the steps of first bending the sheets of glass and second, laminating said bent sheets of glass.

Examples of bending techniques include the curved-profile shaping bed method on straight or curved rotating rolls, gravity bending method, press bending, among others.

The present invention further relates to insulated glazing unit comprising
**a.** at least one thermochromic glazing according to the above,
**b.** spaced apart from a parallel additional substrate;
**c.** a sealed void space defined between the at least one thermochromic glazing and the additional substrate

Insulated glazing units (IGU's) are energy efficient windows, having two or more spaced panes for residential and commercial buildings. An insulated glazing unit typically comprises two or more panes of glass or polymeric material spaced apart and hermetically sealed to form a single unit with an void space between each pane.

Insulated glazing are typically framed in a sash or frame or in a curtain wall. The at least two panes are typically spaced apart from one another by at least one spacer and/or seal. The spacer frame is typically a rigid element positioned between the substrates, which holds them at a certain distance and which extends along the edges of the glazing, forming an internal space (Sp). The circumferential spacer frame may be a solid or hollow element. Typically, a desiccant may be provided in the spacer of the insulated glazing unit.

In the scope of the present invention, the additional substrate of the insulated glazing unit may independently be the same or different from the first substrate of the thermochromic glazing of the present invention, that is, may be any substrate such as glass and polymers such as polycarbonate (PC), polyethylene terephthalate (PET), polystyrene (PS), polyvinyl chloride (PVC), polymethyl methacrylate (PMMA).

Preferably, the additional transparent substrate is a glass substrate having the same or a different composition of the substrate of the thermochromic glazing.

The thickness of the second substrate may range of from 0.5 to 12 mm, or as discussed above. The first substrate and the additional transparent substrate may have the same thickness or have different thicknesses, as the end use requires.

Further substrates may be added, to provide for multiple glazing units having 3 or more panes. Examples of such multiple glazings include triple glazing units, fire resistant glazing, and/or shock or impact resistant glazings.

Similarly as for the laminated glazing, preferably, the thermochromic smart film may be positioned on the surface of the most external pane facing the void space between two panes - that is in position 2 in the installed position.

The present invention also relates to a process to provide for a thermochromic glazing comprising, in sequence, the steps of
1) providing for a first substrate having a first surface and a second surface,
2) depositing a thermochromic smart film on the first surface of the substrate comprising, in sequence,
   i. a first dielectric layer,
   ii. a thermochromic layer,
   iii. an optional metallic barrier layer,
   iv. a protective stack comprising, in sequence,
      1. a first layer impermeable to alkali;
      2. a layer suitable for retention of alkali on the first layer impermeable to alkali and comprising a material other than a material of the first layer impermeable to alkali;
      3. a second layer impermeable to alkali on the layer suitable for retention of alkali and comprising a material other than a material of the layer suitable for retention of alkali, to provide for a coated substrate,
3) subjecting the coated substrate to a thermal treatment at a temperature of from 400 to 700°C.

The deposition methods of the thermochromic smart film on the first surface of the first substrate include CVD, PECVD, PVD, magnetron sputtering, wet coating, etc. Different layers of the thermochromic smart film may be deposited using different techniques.

A preferred technique is magnetron sputtering, providing a suitable crystallization state of the thermochromic layer, upon optimal adjustment of the chosen target and amount of oxygen and/or argon during the sputtering. A suitable ceramic target may comprise vanadium oxide, in the form VOx where x is between 1.5 and 2.5.

The thermal treatment subjected to the thermochromic glazing may comprise heating the glazing to a temperature of at least 400°C in air, for example of from 400 to 500°C, during 2 to 10 minutes, 12 or even 15 minutes according to the heat-treatment type and the thickness of the glazing; alternatively of from 420 to 470°C. This thermal treatment has the advantage of finalizing the crystallization of the thermochromic layer of the thermochromic smart film in presence of the protective stack.

In presence of the optional metallic barrier layer, the thermal treatment subjected to the thermochromic glazing may comprise heating the glazing to a temperature of at least 510°C in air, for example of from 510 to 700°C, during 2 to 10 minutes, 12 or even 15 minutes according to the heat-treatment type and the thickness of the glazing; alternatively of from 560 to 680°C, alternatively of from 640°C to 670°C.

The present thermochromic glazing may be useful in transportation applications or architectural applications, where variable light transmittance may be required for solar control and./or comfort purposes.

Similarly to the present thermochromic glazing, the laminated glazing and insulated glazing comprising said present thermochromic glazing, may also be useful in transportation applications or architectural applications.

Architectural applications include displays, windows, doors, partitions, shower panels, and the like.

Transportation applications include those vehicles for transportation on road, in air, in and on water, in particular cars, busses, trains, ships, aircraft, spacecraft, space stations and other motor vehicles.

Examples of window panes for vehicle include rear window, side windows, sun roof, panoramic roof, windshield or any other window useful for a car, or any glazing for any other transportation device.

The present glazing may be compatible with further functionalities of vehicle windows, such as head up displays, heated glazings, luminous glazings or the like.

### Examples

### Examples 1 to 8, Comparative example 1

Thermochromic glazings comprising a sheet of 2 mm soda-lime glass have been designed, with various thermochromic smart films as outlined in Table 1.

The materials are as follows:
- SiN = silicon nitride
- VO₂ = vanadium oxide
- SiO₂ = silicon oxide
- NiCr = nickel chromium alloy in a 50 at% Ni/50 at% Cr proportion (alternative embodiments may comprise nickel/chromium alloy in a 80 at% Ni/20 at% Cr proportion)

In the scope of the present examples, the layer of vanadium oxide was not doped. In alternative embodiments, the layer of vanadium oxide may comprise 2 %at of tungsten, which would allow for a decrease of the transition temperature down to a temperature of 22 ± 2°C. Other possible amounts of dopants may be of 0.6 or 0.7 at% of tungsten.

Properties of light transmittance (TL, in % - Illuminant D65, 2° according to norm EN410), TTS (solar factor, in % - according to norm EN410) and emissivity (ε, in % - according to EN12898) have been measured.

Comparative example 1 was a thermochromic glazing comprising a thermochromic smart film comprising a layer of vanadium oxide, free of any protective stack. It was found to not resist a thermal treatment at 450°C for 8 minutes.

Example 1 was a thermochromic glazing according to the present invention, comprising a thermochromic smart film comprising a layer of vanadium oxide of 80 nm, provided with a protective stack. Example 1 was found to resist the same thermal treatment at 450°C for 8 minutes.

Example 2 was a thermochromic glazing according to the present invention, comprising a thermochromic smart film comprising a layer of vanadium oxide provided with a protective stack, further comprising a metallic barrier layer of nickel chromium alloy above and in contact with the layer of vanadium oxide. Example 2 was found to resist a thermal treatment at 650°C for 8 minutes. This increase in thermal resistance is considered to be advantageously provided by the metallic barrier layer.

Examples 3 to 5 were thermochromic glazings according to the present invention, comprising a thermochromic smart film comprising a layer of vanadium oxide with varied thickness as compared to Example 1, each provided with a protective stack.

Examples 3 to 5 were found to resist the same thermal treatment at 450°C for 8 minutes.

Examples 1 and 3 to 5 show the increase in thickness of vanadium oxide allows for a decrease in light transmittance but also in total solar factor. The emissivity in the hot state is also decreasing with the increasing thickness of vanadium oxide.

This indicates that, in hot conditions, the visible light transmittance and the infrared transmission decrease, such that solar comfort is improved by a reduction of incoming light and heat.

An optimal compromise is found with Example 3, with great emissivity difference but also light transmittance difference, such that the observer can experience the transition visually and also with respect to thermal comfort. The optimal compromise is set for a maximal TTS difference between the hot and cold states with a 10% difference, compromising between optimal light transmittance and solar comfort.

Examples 6 and 7 were thermochromic glazings according to the present invention, comprising a thermochromic smart film comprising a layer of vanadium oxide of 80 nm, each provided with a protective stack wherein the second layer impermeable to alkali had a varied thickness.

Examples 6 and 7 show the increase in thickness of the second layer impermeable to alkali allows for a decrease in light transmittance. Both were found to resist the same thermal treatment at 450°C for 8 minutes

The examples demonstrate that the protective stack improves temperability and also provides acceptable light transmittance with an acceptable temperature switch value between hot and cold states.

**Table 1**

| | | | | | | | COLD STATE | HOT STATE | COLD STATE | HOT STATE | Difference in TTS (%) | COLD STATE | HOT STATE |
|---|---|---|---|---|---|---|---|---|---|---|---|---|---|
| Layers in nm | SiN | VO₂ | NiCr | SiN | SiO2 | SiN | TL (%) | TL (%) | TTS (%) | TTS (%) | | ε (%) | ε (%) |
| Comparative example 1 | 30 | 80 | - | 30 | - | - | - | - | - | - | - | - | - |
| Example 1 | 30 | 80 | - | 15 | 30 | 15 | 50 | 47 | 55 | 50 | 5 | 86 | 52 |
| Example 2 | 30 | 80 | 1.2 | 15 | 30 | 15 | - | - | - | - | - | - | - |
| Example 3 | 30 | 160 | - | 15 | 30 | 15 | 26 | 21 | 44 | 34 | 10 | 86 | 35 |
| Example 4 | 30 | 240 | - | 15 | 30 | 15 | 13 | 9 | 36 | 27 | 9 | 86 | 25 |
| Example 5 | 30 | 320 | - | 15 | 30 | 15 | 8 | 5 | 33 | 25 | 8 | 80 | 23 |
| Example 6 | 30 | 160 | - | 15 | 30 | 35 | 24 | 21 | 43 | 33 | - | - | - |
| Example 7 | 30 | 160 | - | 15 | 30 | 55 | 20 | 18 | 44 | 33 | - | - | - |

### Example 8 - a to c

Example 8 was a laminated glazing comprising the thermochromic glazing comprising a first substrate, a second substrate, and an interlayer bonding the first substrate of the thermochromic glazing and the second substrate.

The first substrate and the second were both clear float glass sheets of 2.1 mm, the interlayer was varied for Example 8 - a to c, from clear PVB to blue PVB, namely Dark Blue 7558 from Eastman, having a varied thickness, as indicated in Table 2.

The thermochromic smart film was that of Example 1 above.

The structure of the laminated glazing was as follows:
Exterior - Glass/Thermochromic smart film/PVB/Glass - Interior

Optimal color rendering was achieved with the blue PVB having a thickness of 1.52 mm, such that the laminated glazing was considered having a neutral color.

Depending on the end use of the laminated glazing, various color rendering may be achieved by the proper selection of the interlayer material and/or of the glass.

**Table 2**

| Example 8 | PVB | Thickness (mm) | L* | a* | b* |
|---|---|---|---|---|---|
| a | Clear | 0.38 | 68 | 2 | 33 |
| b | Dark blue | 0.76 | 48 | -7 | 12 |
| c | Dark Blue | 1.52 | 33 | -11 | 0 |

### Example 9 - Comparative example 2

Example 9 was a laminated glazing comprising the thermochromic glazing comprising a first substrate, a second substrate, and an interlayer bonding the first surface of the thermochromic glazing and the second surface of the second substrate, further comprising a low emissivity coating on the first surface of the second substrate.

The first substrate and the second were both clear float glass sheets of 2.1 mm, the interlayer was a blue PVB material - Dark Blue 7558 from Eastman, having a thickness of 0.76 mm.

The thermochromic smart film was that of Example 1 above.

The structure of the laminated glazing was as follows:
Exterior - Glass/Thermochromic smart film/PVB/Glass/Low E coating - Interior

Comparative example 2 was typical laminated roof construction for automotive, that is, a laminated glazing comprising a first substrate comprising an infrared reflective coating comprising two silver layers, sandwiched between dielectric layers on its first surface, a second substrate, and an interlayer bonding the first surface of the first substrate and the second surface of the second substrate, further comprising a low emissivity coating on the first surface of the second substrate.

The first substrate was a clear float glass sheets of 2.1 mm and the second substrate was a clear float glass sheets of 1.6 mm, the interlayer was a grey PVB material from Kuraray, having a thickness of 0.76 mm.

The structure of the laminated glazing was as follows:
Exterior - Glass/IR reflective coating/PVB/Glass/Low E coating - Interior

The low emissivity coating of Example 9 and Comparative example 2 comprised, in sequence from the glass surface outwards: a layer of titanium zirconium mixed oxide of 4 nm thickness, a layer of silicon dioxide of 45 nm, a layer of indium tin oxide of 120 nm, a layer of silicon dioxide of 100 nm and a topcoat layer of silicon oxide with zirconium dopant of 20 nm.

The parameters were assessed according to Automotive Reference ISO9050 (Illuminant A, 2°).

Optimal color rendering of Example 9 was achieved with the specific blue PVB, such that the laminated glazing was considered having a neutral color.

Depending on the end use of the laminated glazing, various color rendering may be achieved by the proper selection of the interlayer material and/or of the glass material. Also upon proper selection of glass and/or interlayer, TTS may be varied.

The laminated glazing of Example 9 may be useful as a roof window for an automotive vehicle, as it combines suitable aesthetics and suitable solar protection and/or thermal comfort, in combination with the light transmission variation due to the thermochromic smart film. As can be seen in Table 3, the visible light transmittance and the infrared transmittance both decrease when the thermochromic layer is in the hot state as compared to the cold state - such that effective light and heat shielding occurs, while also ensuring the standard requirements of automobile roofs in terms of reflectance outside and inside.

**Table 3**

| | TL (vis) (%) | TIR (%) | Rout (%) | Rin (%) | TTS (%) | Emissivity (%) |
|---|---|---|---|---|---|---|
| **Example 9 Cold state** | 9 | 22 | 9 | 3 | 27 | 13 |
| **Example 9 Hot state** | 7 | 9 | 10 | 3 | 21 | 13 |
| **Comparative example 2** | 9 | 5 | 12 | 2 | 16 | 13 |

## Claims

1. A thermochromic glazing comprising
a. a first substrate having a first surface and a second surface,
b. a thermochromic smart film on the first surface of the substrate comprising, in sequence,
i. a first dielectric layer,
ii. a thermochromic layer,
iii. a protective stack on the thermochromic layer, said stack comprising, in sequence,
1. a first layer impermeable to alkali;
2. a layer suitable for retention of alkali on the first layer impermeable to alkali and comprising a material other than a material of the first layer impermeable to alkali;
3. a second layer impermeable to alkali on the layer suitable for retention of alkali and comprising a material other than a material of the layer suitable for retention of alkali.

2. The thermochromic glazing according to claim 1, wherein the thermochromic layer is selected from vanadium oxide, or doped vanadium oxide.

3. The thermochromic glazing according to claim 2, wherein the dopant of the vanadium oxide is selected from titanium (Ti), niobium (Nb), molybdenum (Mo), iridium (Ir), tungsten (W), tantalum (Ta), magnesium (Mg), fluorine (F), strontium (Sr), or mixtures of these.

4. The thermochromic glazing according to any one of the preceding claims, wherein the first layer impermeable to alkali and the second layer impermeable to alkali are independently selected from silicon nitride and/or aluminium nitride.

5. The thermochromic glazing according to any one of the preceding claims, wherein the layer suitable for retention of alkali is selected from silicon oxide, tin oxide, mixed oxide of tin and zinc.

6. The thermochromic glazing according to any one of the preceding claims, wherein the first dielectric layer is selected from oxides, nitrides, oxynitrides or oxycarbides of Zn, Sn, Ti, Zr, Si, In, Al, Bi, Ta, Hf, Mg, Nb, Y, Ga, Sb, Mg, Cu, Ni, Cr, Fe, V, B or mixtures thereof.

7. The thermochromic glazing according to any one of the preceding claims, wherein the thermochromic smart film further comprises a metallic barrier layer between the thermochromic layer and the protective stack.

8. The thermochromic glazing according to claim 7, wherein the metallic barrier layers is selected from titanium, zinc, nickel, aluminium chrome and mixtures thereof.

9. The thermochromic glazing according to any one of the preceding claims, wherein the first substrate is selected from glass.

10. A laminated glazing comprising
a. a thermochromic glazing according to any one of claims 1 to 9, having a first substrate having a first and a second surface,
b. a second substrate having a first surface and a second surface,
c. an interlayer bonding the first surface of the first substrate of the thermochromic glazing and the second surface of the second substrate.

11. The laminated glazing of claim 10, wherein the second substrate is a glass substrate, having the same or a different composition of the substrate of the thermochromic glazing.

12. The laminated glazing of any one of claims 10 to 11, further comprising a low emissivity coating comprising a transparent conductive oxide or a nitride based functional layer on the first surface of the second substrate.

13. The laminated glazing of any one of claims 10 to 12, wherein the interlayer is selected from clear or colored interlayer materials.

14. An insulated glazing unit comprising
a. at least one thermochromic glazing according to any one of claims 1 to 9,
b. spaced apart from a parallel additional substrate;
c. a sealed void space defined between the at least one thermochromic glazing and the additional substrate.

15. The insulated glazing unit of claim 14, wherein the additional substrate is a glass substrate, having the same or a different composition of the substrate of the thermochromic glazing.

16. A Process to provide for a thermochromic glazing comprising, in sequence, the steps of
1) providing for a first substrate having a first surface and a second surface,
2) depositing a thermochromic smart film on the first surface of the substrate comprising, in sequence,
i. a first dielectric layer,
ii. a thermochromic layer,
iii. an optional metallic barrier layer,
iv. a protective stack comprising, in sequence,
1. a first layer impermeable to alkali;
2. a layer suitable for retention of alkali on the first layer impermeable to alkali and comprising a material other than a material of the first layer impermeable to alkali;
3. a second layer impermeable to alkali on the layer suitable for retention of alkali and comprising a material other than a material of the layer suitable for retention of alkali, to provide for a coated substrate,
3) subjecting the coated substrate to a thermal treatment at a temperature of from 400 to 700°C.

17. Use of the thermochromic glazing according to any one of claims 1 to 9, as a window pane in transportation applications or architectural applications.

18. Use of the laminated glazing according to any one of claims 10 to 13, as a window pane in transportation applications or architectural applications.

19. Use of the insulated glazing according to any one of claims 14 to 15, as a window pane in transportation applications or architectural applications.
